Europäisches Patentamt

European Patent Office

Office européen des brevets

(11) Publication number: **0 105 388**
A1

# (12) EUROPEAN PATENT APPLICATION

(21) Application number: **83109154.1**

(22) Date of filing: **16.09.83**

(51) Int. Cl.³: **C 08 L 67/02**
//(C08L67/02, 69/00, 53/00, 55/00)

(30) Priority: **28.09.82 US 425711**

(43) Date of publication of application:
**18.04.84 Bulletin 84/16**

(84) Designated Contracting States:
**DE FR GB IT NL SE**

(71) Applicant: GENERAL ELECTRIC COMPANY
1 River Road
Schenectady New York 12305(US)

(72) Inventor: Dieck, Ronald Lee
881 Rubis Drive
Sunnyvale California 94087(US)

(72) Inventor: Thompson, Robert Glenn
300 Washington Avenue
Mt. Vernon Indiana 47620(US)

(72) Inventor: Kostelnik, Robert James
914 Oakburne Road
West Chester Pennsylvania 19380(US)

(74) Representative: Schüler, Horst, Dr. European Patent
Attorney et al,
Kaiserstrasse 41
D-6000 Frankfurt/Main 1(DE)

(54) **Modified thermoplastic polyester molding compositions and articles molded therefrom.**

(57) Thermoplastic molding compositions which comprise (a) a poly($C_{2-6}$ alkylene terephthalate) resin and a minor proportion of (b) an aromatic polycarbonate resin which may also contain silicone units in combination with (c) a rubbery thermoplastic vinyl polymer which preferably contains olefinic units or a rubbery poly(carbonate-co-ester) resin, provide molded articles of improved impact resistance. Optionally the compositions contain a polyethylene resin as a processing and a fibrous reinforcing agent, a mineral filler, and a flame retardant. In preferred embodiments, articles molded from the compositions possess improved impact resistance, lower specific gravity, good tensile strength, improved resistance to distortion at elevated temperatures under load, and improved receptivity for colorants.

EP 0 105 388 A1

Croydon Printing Company Ltd.

UNITED STATES PATENT APPLICATION

OF:   Ronald Lee Dieck, Robert Glenn Thompson
      and Robert James Kostelnik


FOR:   MODIFIED THERMOPLASTIC POLYESTER MOLDING
       COMPOSITIONS AND ARTICLES MOLDED THEREFROM


## BACKGROUND OF THE INVENTION

The present invention relates to modified thermoplastic poly($C_{2-6}$ alkylene terephthalate) molding compositions which in preferred instances provide molded articles possessing improved impact resistance, lower specific gravity, improved resistance to distortion under load, and improved receptivity to colorants. More particularly, the invention relates to compositions of (a) a ($C_{2-6}$ alkylene terephthalate) resin, (b) an aromatic polycarbonate resin which may also contain silicone units, and (c) a rubbery thermoplastic vinyl addition polymer or an aromatic poly(carbonate-co-ester) resin.

Optionally the compositions contain polyethylene as a processing aid; a fibrous reinforcing agent; mineral fillers; and flame retardants. The invention includes articles molded from the composition.

High molecular weight linear polyesters of $C_{2-4}$ glycols with terephthalic acid (and isophthalic acid and other similar dibasic acids) have been available for many years. Certain of these are described in Whinfield et al. U.S. Patent 2,465,319 and in Pengilly U.S. Patent 3,047,539, incorporated herein by reference.

With the development of molecular weight control, the use of nucleating agents and two-step molding cycles, polyethylene terephthalate and, in general, the poly-($C_{2-6}$ alkylene terephthalate) resins have become important constituents of injection moldable compositions. Poly-(1,4-butylene terephthalate), because of its very rapid crystallization from the melt, is uniquely useful as a component of such compositions. Workpieces molded from such polyester resins, alone or combined with reinforcements, in comparison with other thermoplastics possess a high degree of surface hardness, abrasion resistance and gloss, and a low degree of surface friction.

Stable polyblends of poly(1,4-butylene terephthalate) and polyethylene terephthalate can be molded into useful unreinforced and reinforced articles. See Fox and Wambach U.S. 3,953,394, incorporated herein by reference.

Block copolyesters containing units derived from poly(1,4-butylene terephthalate) and from an aromatic aliphatic or aliphatic polyester are also known. See copending application U.S. Serial No. 752,325 filed December 20, 1976, incorporated herein by reference. Such block copolyesters are useful alone as molding resins and also in intimate combination with poly(1,4-butylene terephthalate) and/or polyethylene terephthalate.

It has been proposed to increase the impact strengths of such polyesters by adding modifiers. For example, Brinkmann et al. in U.S. 3,591,659 disclose that a useful family of modifiers comprises polyalkyl acrylates, methacrylates and/or ethacrylates. Baron et al. in U.S. 4,044,073 disclose that a useful impact modifier for such polyesters is an aromatic polycarbonate. Schlichting et al. in U.S. 4,022,748 disclose that a rubber-elastic graft copolymer having a glass temperature below -20°C. is a useful modifier. Lane, U.S. 4,034,013 and Farnham et al., U.S. 4,096,202 disclose that useful impact modifiers comprise multiple-stage polymers having a rubbery first stage and a hard final stage, preferably including units derived from alkyl acrylates, especially the butyl acrylates. Baron et al. in U.S. 4,034,016 disclose an impact modifier combination comprising a blend of a polyurethane and an aromatic polycarbonate. Copending application Serial No. 870,679 filed January 19, 1978, discloses an impact modifier combination comprising a segmented block copolyester and an aromatic polycarbonate, and Cohen et al. copending application Serial No. 957,801 discloses combinations of polyarylate resins and aromatic polycarbonate resins for the purpose. Reinforced, filled and/or flame retardant modifications of such polyesters are also well-known in the art.

It has now been discovered that molding compositions comprising a predominantly poly($C_{2-6}$ alkylene terephthalate) resin, including copolyesters thereof, provide moldings of improved impact resistance, flexural and tensile strength and resistance to distortion at elevated temperatures under load, as well as lower specific gravity and improved color receptivity, when the compositions include in intimate admixture a polycarbonate resin and a rubbery vinyl addition resin which preferably contains olefinic units in the carbon chains thereof, or a poly(co-carbonate-ester). As is shown below, compositions modified with the polycarbonate resin alone on the one hand, or with the vinyl resin on the other hand, are significantly less tough. As is also shown below, all the new compositions of the present invention can advantageously contain any of the reinforcing fibers (glass and graphite), fillers (talc, clay and mica), stabilizers, colorants, mold release agents and flame retardants and the like which are customarily present in molding compositions based on the poly(alkylene terephthalate) resins.

## DESCRIPTION OF THE INVENTION

The invention provides thermoplastic molding compositions comprising (a) a poly($C_{2-6}$ alkylene terephthalate) resin and a minor proportion of (b) an aromatic poly-carbonate resin; in combination with (c) a rubbery vinyl addition polymer or a poly(co-carbonate-ester) resin, the combined amounts of (b) and (c) being effective to increase the impact strength of articles molded from said resin (a). Optionally the compositions can also contain polyethylene as processing aid, and one or more fibrous reinforcing agents, mineral fillers, and flame retardants, and the like.

The polyester resins (a) of the composition of the present invention are available commercially. They can be prepared by known methods such as the alcoholysis of dimethyl terephthalate with an appropriate diol (for example, ethylene glycol and 1,4-butanediol) followed by polymerization, or by reacting the acid or its mono- or di-halide with an appropriate diol or mixture of diols. Copolyesters can be prepared in similar manner by replacement of parts of the terephthalate component with another suitable acid component, for example isophthalic acid. Suitable methods are described in U.S. 2,465,319 and U.S. 3,047,539. The preparation of block copolyesters is described in Borman, Dolce and Kramer application Serial No. 752,325 filed on December 20, 1976 and incorporated herein by reference.

Illustratively, suitable high molecular weight polyesters have an intrinsic viscosity of at least about 0.4 deciliters per gram and preferably at least 0.6 deciliters per gram as measured in a 60:40 phenol:tetrachloroethane mixture at 30°C. for poly(ethylene terephthalate)

- 6 -

and at least 0.6 dl./g. and preferably at least 0.8
dl./g. for poly(1,4-butylene terephthalate).

Polyesters which are especially useful when
high melt strength is important are the branched high
melt viscosity poly(1,4-butylene terephthalate) resins
which contain a small amount (up to about 5 mol percent
of the terephthalate units) of a branching component
which contains at least three ester-forming groups. The
branching component can be one which provides branching
in the acid unit of the polyester or in the glycol unit,
and both types of branching components can be present.
Illustrative of suitable branching components are tri-
and tetracarboxylic acids such as trimesic acid, pyromellitic acid, and the lower alkyl esters thereof, and
preferably polyols and especially preferably tetrols such
as pentaerythritol, triols such as trimethylolpropane,
and dihydroxy mono- and dicarboxylic acids and derivatives
such as dimethyl hydroxy terephthalate and the like.

The branched poly(1,4-butylene terephthalate)
resins and methods for their preparation are described
in Borman, U.S. 3,953,404 incorporated herein by reference.

The vinyl addition polymer component (c) of the
impact modifier combination can be any normally rubbery
thermoplastic vinyl polymer. Suitable polymers are the
commercial copolymers of butyl acrylate and styrene;
butyl acrylate, methyl methacrylate and styrene; butyl
acrylate and methyl methacrylate (Acryloid KM 330 of Rohm
& Haas Co., Philadelphia, Pa.); EPDM (Epsyn 436) and methyl
methacrylate and styrene. Other useful vinyl polymers are
the polyacrylates which are sold under the trade designation
RXL 6886 by Goodyear Tire & Rubber Co. of Akron, Ohio;
Cyanacryl 770 of American Cyanamid Co. of Wayne, N.J.;

Durostrength 200 of M&T Chemicals Co., Trenton, N.J.; and Polysar S 1006. In general, any of the poly($C_{2-4}$ alkyl acrylates) and methacrylates described in Brinkmann et al. U.S. 3,591,659 can be used, especially those containing units derived from n-butyl acrylate. Without limitation, the polyvinyl resin can be a rubbery elastic graft copolymer having a glass transition temperature below 20°C. as described in Schlichting et al. U.S. 4,022,748, or it can be a multiple stage polymer having a rubbery first stage and a hard, thermoplastic final stage as is described in Farnham et al. U.S. 4,096,202, incorporated herein by reference.

Moreover, the rubbery vinyl addition resins can include those which contain olefinic units in their backbone chains. Such polymers are readily made by including a minor amount, in the range of 2 to 20 mol percent, of a conjugated diene in the initial polymerization mixture.

A large number of conjugated dienes are known which are suitable for the purpose. Illustratively, these include 1,3-butadiene, 2,3-dimethyl-1,3-butadiene, chloroprene and 2-methyl butadiene and mixtures thereof.

Illustrative polymers which contain olefinic units in the chain are the acrylonitrile-butadiene copolymer available under the name Krynac 221, 110C, etc.; the acrylonitrile-butadiene-styrene copolymer prepared by grafting styrene and acrylonitrile on polybutadiene and available from Polysar Corp. of Canada as Polysar XC-501; isobutylene-isoprene copolymer available under the name Polysar Butyl 301; the methyl methacrylate-acrylonitrile-butadiene-styrene copolymer; the methyl methacrylate-butadiene-styrene copolymer; polybutadiene (available under the designation Taktene 1202); and
the butadiene-styrene block copolymer available under
the name Kraton G.

The aromatic polycarbonate resins which are
suitable for use as component (b) are well known, and
many suitable resins of this group are disclosed in
Encyclopedia on Polymer Science and Technology, Vol. 10,
pages 710-727, 1969 Interscience, New York and in Baron
et al. U.S. Patent No. 4,034,016 all incorporated herein
by reference. The polycarbonates are produced by reaction
of a suitable dihydric phenol compound with phosgene. The
reaction is continued until a polycarbonate resin is formed.
Because of its ready availability, the ease with which it
reacts with phosgene and the very satisfactory properties
which it provides in polymerized form, bisphenol-A is
preferred as the starting dihydric phenol compound. A
suitable aromatic polycarbonate is available under the
trademark LEXAN ® from General Electric Co. Also suitable
is a poly(carbonate-co-silicone) resin known as Copel 3320.

The rubbery vinyl addition polymer and the poly-
carbonate components (b) and (c) are present in respective
weight ratios between 10:1 and 1:10 and preferably in a
ratio between 3:1 and 1:3. The combined weights of (b)
and (c) are between 5% and 85%, and preferably between 15%
and 60% of the weight of the total resin content of the composition.

In contemplated embodiments the composition includes reinforcing fillers such as fibrous (filamentous)
glass and/or graphite; mineral fillers such as mica, talc
and the like, and preferably, clay; and polyethylene or
other similar polymers as carrier for the vinyl component.
The filamentous glass suitable for use as reinforcement

0105388

in such embodiments is well known to those skilled in the art and is available from a number of manufacturers. For compositions ultimately to be employed for electrical uses, it is preferred to use filaments of a lime-aluminum boro-silicate glass that is substantially soda-free. This is known as "E" glass. However, other glasses are useful when electrical properties are not important, and there the low soda glass known as "C" glass can be used. The filaments are made by standard processes, e.g., by steam, air or flame blowing and, preferably, by mechanical pulling. The filaments preferably have diameters between about 0.00012" and 0.00075", but this is not critical to the present invention. The fillers can be untreated or treated with silane. The polyethylene preferably is of the low-density type.

The length of the glass filaments and whether or not they are bundled into fibers and the fibers bundled in turn to yarns, ropes or rovings, or woven into mats and the like, are also not critical to the invention. However, in preparing the molding compositions, it is convenient to use the filamentous glass in the form of chopped strands about 1/8" to about 2" long. In articles molded from the compositions, on the other hand, fibers of shorter length may be present because, during compounding, considerable fragmentation occurs. This is desirable, however, because, the best properties are exhibited by thermoplastic injection molded articles in which the filament lengths lie between about 0.0005" and 0.250".

The amount of the filler varies widely depending on the strength specifications which are to be met, it being essential only that an amount is employed which is at least sufficient to provide some reinforcement. Preferably, however, the weight of the reinforcing fibers

BAD ORIGINAL

is between about 1% and 60% of the combined weight of
filler and the resinous components of the mixture.

It has also been discovered that the polyester
compositions of this invention which contain modifiers
and fibrous glass exhibit improved impact and flexural
properties when the glass is predispersed in the resin.

The impact modified polyesters, with and with-
out fibrous reinforcement and filler, can be rendered
flame retardant with an effective amount of a conventional
flame retardant agent. As is well known, flame retardants
can be based on elementary red phosphorus, phosphorus com-
pounds, halogen and nitrogen compounds alone or, preferably,
in further combination with synergists such as antimony
compounds. Especially useful are polymeric and oligomeric
flame retardant agents comprising tetrabromobisphenol-A
carbonate units; see, for example, Wambach, U.S. Patent No.
3,833,685 which is incorporated herein by reference.

Other materials such as stabilizers, dyes,
pigments, drip retardants and the like can be added for
their conventionally employed purposes in conventional
amounts.

The molding compositions of this invention can
be prepared by a number of procedures. In one way, the
modifier and any reinforcement (e.g., glass fibers),
filler material, fire retardant and other components are
put into an extrusion compounder with the resinous components to produce molding pellets. As a result, the modifier and the other components when present are dispersed
in a matrix of the resin. In another procedure, the modifier is mixed with the resins by dry tumbling and then
the mixture is either fluxed on a mill and comminuted or extruded to form strands which are then chopped. The modifying agents can also be mixed with the resins and directly molded by injection, extrusion or transfer molding or by any other conventional method.

It is always important to free all of the ingredients from as much water as possible before subjecting them to any molding operation. The components can be satisfactorily dried by heating them at 100°C. under vacuum for several hours.

In addition, it is desirable that the duration of the compounding step should be short to prevent degradation of the polymers and other components. The temperature should be controlled below the polymer degradation point and the heat of friction should be taken into account, the object being to form an intimate mixture among the structural resin component (a) and the modifying polymers (b) and (c).

Best results are usually obtained when the ingredients are pre-compounded, pelletized and then molded. Pre-compounding can be carried out in conventional equipment. For example, after the components have been thoroughly dried as described, a single-screw extruder is fed with a dry mixture of the ingredients, the screw employed having a long transition section to ensure proper melting. On the other hand, a twin-screw extrusion maching, e.g., a 28-mm. Werner-Pfleiderer machine, can be fed with resin and additives at the feed port and with reinforcement through a downstream port. In either case, a generally suitable machine temperature is between about 450° and 600°F. depending on the melting point of the poly(alkylene terephthalate) in the composition.

The compounded composition can be extruded and cut up into molding compounds such as conventional granules, pellets and other shapes by standard techniques.

The composition can be molded in any equipment which is suitable for the molding of fiber-reinforced thermoplastic compositions, e.g., a Newbury-type injection molding machine with conventional cylinder temperatures (450-600°F.) and conventional mold temperatures (150°-200°F.), the molding temperature being such that the resinous components reach their fusion point.

The invention is further illustrated by the examples which follow. These examples are best embodiments of the invention, and the invention is not to be construed in limitation thereof. Parts are by weight except where otherwise stated.

EXAMPLE 1

The following illustrates the effect of the combination of a rubbery vinyl polymer containing olefinic linkages in the chain and an aromatic polycarbonate in improving the impact strength of a poly($C_{2-6}$ alkylene terephthalate) resin molding which contains glass fiber reinforcement and a mineral filler.

To 100 parts of a commercial poly(1,4-butylene terephthalate) resin (VALOX 310 of General Electric Co.) were added 15 parts of a rubbery vinyl acrylonitrile-butadiene-acrylonitrile block copolymer, 15 parts of a poly(bisphenol-A carbonate) resin (LEXAN 135 of General Electric Co.) 30 parts of glass fibers (chopped), 10 parts of clay filler, and 15 parts of poly(ethylene terephthalate) as supplementary resin.

All components are granular and were tumble mixed until a uniform composition was obtained. This composition was dried overnight at 110°C., then extruded in a laboratory 1-3/4" Sterling Machine at 250°C. The chopped pellets and the blend were injection molded into standard ASTM test parts. The test parts possessed improved impact strength as the result of the presence of the supplementary resins therein.

EXAMPLE 2

The following illustrates the effect of the addition of poly(bisphenol-A carbonate)resin in combination with a variety of vinyl polymers in improving the impact strength of molded articles prepared with poly-(ethylene terephthalate) resin as the major component.

.The following compositions were mixed, dried, extruded and then molded in accordance with the method of Example 1.

## Table 2A

| Component | 1 | 2 | 3 | 4 | 5 | 6 |
|---|---|---|---|---|---|---|
| PET[1] | 68.3 | 68.3 | 68.2 | 58.2 | 48.3 | 48.3 |
| Sodium benzoate[2] | -- | -- | -- | 0.1 | -- | -- |
| Acryloid KM 330[3] | 15 | -- | -- | 15 | -- | -- |
| Methyl methacrylate butadiene-styrene copolymer | -- | 15 | -- | -- | 10 | -- |
| Kraton 1651G[4] | -- | -- | 15 | -- | -- | 10 |
| LEXAN ®[5] | 15.0 | 15 | 15 | 15 | 10 | 10 |
| IRGANOX 1093[6] | .15 | .15 | .15 | .15 | .15 | .15 |
| Ferro-904[7] | .05 | .05 | .05 | .05 | .05 | .05 |
| Microthene FN 510[8] | 1.5 | 1.5 | 1.5 | -- | -- | -- |
| Glass | -- | -- | -- | 10 | 30 | 30 |
| Polyethylene[9] | -- | -- | -- | 1.5 | 1.5 | 1.5 |

[1] poly(ethylene terephthalate)

[2] nucleating agent

[3] a butyl acrylate and methyl methacrylate core-shell copolymer of Rohm & Haas Co.

[4] a hydrogenated butadiene-styrene block copolymer of Shell Chemical Co.

[5] a poly(bisphenol-A carbonate) from General Electric Co.

[6] an anti-oxidant stabilizer from Ciba-Geigy Co.

[7] a phosphite stabilizer from Ferro Co.

[8] a low density polyethylene, fine grind powder

[9] a low density polyethylene, pelletized

Test samples prepared from each of the above compositions had the following physical properties:

## Table 2B

| Properties | Compositions | | | | | |
|---|---|---|---|---|---|---|
| | 1 | 2 | 3 | 4 | 5 | 6 |
| Heat Distortion, °F., 66 psi | 176 | 166 | 158 | 180 | 191 | 192 |
| Notched Izod, ft.lb./in. | 1.9 | 1.9 | 1.5 | 2.0 | 1.9 | 2.0 |
| Unnotched Izod, ft.lb./in. | nb* 20.3 | nb | nb 17.2 | 11.87 | 14.60 | 15.02 |
| Flex, strength, $10^6$ psi | 10430 | 10999 | 9003 | 14304 | 25276 | 23174 |
| Flex, modulus, $10^6$ psi | 0.282 | 0.282 | 0.257 | 0.452 | 0.905 | 0.781 |
| Tensile Strength, psi | 6483 | 6645 | 5457 | 9660 | 16597 | 14677 |
| % Elongation | 52 | 142 | 89 | -- | -- | -- |
| Specific Gravity | 1.280 | 1.256 | 1.229 | 1.325 | 1.494 | 1.456 |
| Gardner Impact, bottom,in.-lbs. | -- | -- | -- | 8 | 8 | 10 |
| Gardner Impact, top, in.-lbs. | -- | -- | -- | 32 | 40 | 46 |
| Gardner Impact, dislodge, in-lbs. | 325 | 470 | 150 | 100 | 70 | 70 |
| Melt Viscosity (pellets),poises at 510°F. | 3684 | 2889 | 1075 | 2781 | 13660 | 9039 |

*nb - No break

The impact strength of molded articles prepared with poly(ethylene terephthalate) as the major component was improved by the addition of a poly(bisphenol-A carbonate) in combination with a vinyl polymer.

- 16 -

EXAMPLE 3

The following illustrates the effect of a minor amount of a poly(bisphenol-A carbonate) resin in combination with a minor amount of one of several rubbery vinyl polymers in improving the impact strength of poly(1,4-butylene terephthalate) resin moldings.

Table 3A

| Component | 1 | 2 | 3 | 4 | 5 | 6 |
|---|---|---|---|---|---|---|
| Valox 315[1] | 68.3 | 68.3 | 68.3 | 68.3 | 68.3 | 68.3 |
| Lexan 135-111 | 15.0 | 15.0 | 15.0 | 15.0 | 15.0 | 15.0 |
| Microthene FN-510 | 1.5 | 1.5 | 1.5 | 1.5 | 1.5 | 1.5 |
| Irganox 1093 | .15 | .15 | .15 | .15 | .15 | .15 |
| Ferro 904 | .05 | .15 | .05 | .05 | .05 | .05 |
| Durostrength 200[2] | 15 | -- | -- | -- | -- | -- |
| Polysar XC 501[3] | -- | 15 | -- | -- | -- | -- |
| Gulf P 218[4] | -- | -- | 15 | -- | -- | -- |
| Hycar 211-21-95-1[5] | -- | -- | -- | 15 | -- | -- |
| Hycar 211-21-96-1[6] | -- | -- | -- | -- | 15 | -- |
| Hycar 211-21-97-1[7] | -- | -- | -- | -- | -- | 15 |

[1] poly(1,4-butylene terephthalate) resin of General Electric Co.

[2] butylacrylate-methyl methacrylate copolymer from Metal and Thermit Co.

[3] acrylonitrile-butadiene copolymer from Polysar Corp., Canada

[4] ethylene copolymer

[5-7] acrylonitrile-butadiene rubbers from B.F. Goodrich Chemical Co.

Each of the above compositions were mixed, dried, extruded and then molded into test pieces by the method of Example 1.  The test pieces had the following properties:

Table 3B

| Properties | Compositions | | | | | |
|---|---|---|---|---|---|---|
| | 1 | 2 | 3 | 4 | 5 | 6 |
| Heat distortion, °F., 66 psi | 198 | 218 | 240 | 236 | 208 | 190 |
| Heat distortion, °F., 264 psi | 100 | -- | 123 | 128 | 129 | 125 |
| Notched Izod, ft.-lbs./in. | 5.17 | 7.95 | 2.40 | 2.83 | 2.61 | 4.67 |
| Unnotched Izod, ft.-lbs./in. | nb | nb | nb | nb | nb | nb |
| Flex strength, psi | 10668 | 10377 | 9835 | 10034 | 9994 | 9690 |
| Flex modulus, psi | 281735 | 281735 | 261713 | 272791 | 281735 | 267137 |
| Tensile strength, psi | 6496 | 6189 | 6025 | 6080 | 6189 | 5847 |
| % Elongation | 177 | 214 | 160 | 130 | 114 | 68 |
| Specific gravity | 1.254 | 1.230 | 1.210 | 1.247 | 1.249 | 1.246 |
| Gardner (no collar) in.-lbs. | 480 | 480 | 470 | 460 | 480 | 420 |
| Gardner Impact dislodge,in.-lbs. | 465 | 465 | 480[+] | 440 | 460 | 450 |
| Melt Viscosity (pellets),poises at 510°F. | 2626 | 7545 | 6752 | 6433 | 6411 | 5463 |

The impact strength of poly(1,4-butylene terephthalate) resin moldings is improved by addition of a poly(bisphenol-A carbonate) resin in combination with a rubbery vinyl polymer.

0105388

- 18 -

EXAMPLE 4

The following illustrates the improved impact
strength imparted to a poly(alkylene terephthalate)
molding resin when a small uniformly-distributed amount
of a poly(carbonate-co-silicone) resin is added alone,
or with a polycarbonate homopolymer or a rubbery vinyl
polymer.

Six molding compositions were prepared following the method of Example 1 as follows:

Table 4A

| Component | 1 | 2 | 3 | 4 | 5 | 6 |
|---|---|---|---|---|---|---|
| Valox 315 | 68.3 | 68.3 | 68.3 | 78.3 | 68.3 | 68.3 |
| Microthene FN-510 | 1.5 | 1.5 | 1.5 | 1.5 | 1.5 | 1.5 |
| Irganox 1093 | .15 | .15 | .15 | .15 | .15 | .15 |
| Ferro 904 | .05 | .05 | .05 | .05 | .05 | .05 |
| Copel 3320[1] | -- | 15 | 15 | 20 | 15 | 15 |
| KM 330[2] | 15 | 15 | -- | -- | -- | -- |
| Lexan 135 | 15 | -- | 15 | -- | -- | -- |
| Kraton G | -- | -- | -- | -- | 15 | -- |
| MMBS[3] | -- | -- | -- | -- | -- | 15 |

[1]  poly(bisphenol-A carbonate-silicone).

[2]  butylacrylate-methyl methacrylate core-shell copolymer

[3]  methyl methacrylate-butadiene-styrene copolymer

The physical properties of test pieces prepared as in Example 1 of each of the compositions were as follows:

Table 4B

| Properties | Compositions | | | | | |
|---|---|---|---|---|---|---|
| | 1 | 2 | 3 | 4 | 5 | 6 |
| Heat distortion, °F., 264 psi | 134 | 117 | 137 | 122 | 120 | 120 |
| Notched Izod, 1/4:,ft.lbs./in. | 17.3 | 20.7 | 17.4 | 12.4 | 3.4 | 3.4 |
| Notched Izod, 1/8",ft.lbs./in. | 21.90 | 22.56 | 20.54 | 15.71 | 21.01 | 19.50 |
| Unnotched Izod, ft.lbs./in. | 5nb* | 5nb | 5nb | 5nb | 5nb | 5nb |
| Flex Strength, psi | 10761 | 7694 | 10695 | 9280 | 6808 | 8064 |
| Flex Modulus, psi | 291285 | 20705 | 277191 | 249070 | 173594 | 217542 |
| Tensile strength, psi | 6394 | 4653 | 6509 | 5530 | 4196 | 4766 |
| % Elongation | 207 | 238 | 277 | 315 | 302 | 351 |
| Specific gravity | 1.247 | 1.238 | 1.247 | 1.255 | 1.193 | 1.219 |
| Gardner Impact dislodge,in.lbs. | 480+ | 480+ | 480+ | 480+ | 480+ | 480+ |
| Melt Viscosity (pellets),poises at 266°C. | 10095 | 5139 | 6434 | 4337 | 6142 | 5543 |

* 5 specimens tested did not break.

The addition of a poly(carbonate-co-silicone) resin, added alone or in combination with either a polycarbonate homopolymer or a rubbery vinyl polymer to a poly(ethylene terephthalate) molding resin provides molded articles having a marked increase in impact strength.

- 20-

## EXAMPLE 5

The following illustrates the effect of a poly(carbonate-co-silicone) resin and a resin comprising a polyester-ether block copolymer consisting of polybutylene terephthalate and polybutylene oxide blocks in combination with glass fibers in improving the impact resistance of poly(1,4-butylene terephthalate) resin molded articles.

The following compositions were prepared in accordance with the method of Example 1:

Table 5A

| Component | 1 | 2 | 3 | 4 | 5 |
|---|---|---|---|---|---|
| VALOX 300 | 49.85 | 49.85 | 54.85 | 59.85 | 64.85 |
| Glass | 30.00 | 30.00 | 30.00 | 30.00 | 30.00 |
| PE-18[1] | .10 | .10 | .10 | .10 | .10 |
| Ferro | .05 | .05 | .05 | .05 | .05 |
| Copel 3320 | -- | 20 | 15 | 10 | 5 |
| Hytrel 4056[2] | 20 | -- | -- | -- | -- |

[1] pentaerythritol tetrastearate

[2] Hytrel 4056 from Dupont

Test pieces prepared by the extrusion - molding process of Example 1 had the following physical properties:

## Table 5B

| Property | Composition | | | | |
|---|---|---|---|---|---|
| | 1 | 2 | 3 | 4 | 5 |
| Heat distortion, °F., 264 psi | 317 | 357 | 375 | 378 | 393 |
| Notched Izod, ft.-lbs./in. | 3.46 | 2.58 | 2.54 | 2.37 | 2.22 |
| Unnotched Izod, ft.-lbs./in. | 15.46 | 9.74 | 11.06 | 14.29 | 14.91 |
| Flex Strength, psi | 17186 | 14317 | 17490 | 21072 | 23928 |
| Flex Modulus, psi | 636513 | 636513 | 687434 | 781175 | 904518 |
| Tensile strength, psi | 10837 | 9429 | 11541 | 13653 | 15147 |
| Specific gravity | 1.488 | 1.469 | 1.482 | 1.495 | 1.518 |
| Gardner Impact (bottom),in-lbs. | 12 | 12 | 12 | 12 | 12 |
| Gardner Impact (top),in.-lbs. | 48 | 40 | 44 | 44 | 40 |
| Gardner Impact (dislodge),in.-lbs. | 120 | 96 | 92 | 84 | 72 |
| Melt viscosity (pellets) in poises at 250°C. | 10662 | 8462 | 10662 | 12099 | 12599 |

The impact resistance of poly(1,4-butylene tere-phthalate) resin molded articles is improved by the addition of a resin comprising a polyester-ether block copolymer of polybutylene terephthalate and polybutylene oxide blocks in combination with glass fibers. Impact resistance is likewise improved by addition of poly(carbonate-co-silicone) in combination with glass fibers.

- 22 -

## EXAMPLE 6

The following illustrates the improved impact resistance obtained if a small amount of a poly(carbonate-ester) is added to a molding resin composition containing a poly(alkylene terephthalate) and a vinyl copolymer.

Six molding compositions were prepared in accordance with the method of Example 1 as follows:

### Table 6A

| Component | 1 | 2 | 3 | 4 | 5 | 6 |
|---|---|---|---|---|---|---|
| Valox 315 | 68.3 | 68.3 | 78.3 | 68.3 | 68.3 | 68.3 |
| Microethene FN-510 | 1.5 | 1.5 | 1.5 | 1.5 | 1.5 | 1.5 |
| Irganox 1093 | .15 | .15 | .15 | .15 | .15 | .15 |
| Ferro 904 | .05 | .05 | .05 | .05 | .05 | .05 |
| Copolyester-carbonate resin[1] | 15 | 15 | 20 | 15 | 15 | -- |
| KM 330 | 15 | -- | -- | -- | -- | -- |
| Lexan 135 | -- | 15 | -- | -- | -- | 15 |
| Kraton G | -- | -- | -- | 15 | -- | -- |
| MMBS | -- | -- | -- | -- | 15 | -- |

[1] a poly(carbonate-ester) made by interfacially condensing bisphenol-A, phosgene and a mixture of terephthaloyl chloride and isophthaloyl chloride.

The compositions were injection molded as in Example 1 into test pieces having the following properties:

Table 6B

| Properties | Compositions | | | | | |
|---|---|---|---|---|---|---|
| | 1 | 2 | 3 | 4 | 5 | 6 |
| Heat Distortion, °F., 264 psi | 142 | 153 | 153 | 145 | 153 | 154 |
| Notched Izod, (1/4"),ft.-lbs./in. | 13.90 | -- | -- | 3.40 | 17.37 | 17.37 |
| Notched Izod, (1/8"),ft.-lbs./in. | 19.58 | 1.54 | 1.28 | 24.11 | 20.19 | 22.19 |
| Unnotched Izod, ft.lbs./in. | 5nb | 5nb | 5nb | 5nb | 5nb | 5nb |
| Flex Strength, psi | 10272 | 13206 | 12595 | 8779 | 10972 | 10695 |
| Flex Modulus, psi | 256505 | 324261 | 330497 | 232241 | 277191 | 272791 |
| Tensile Strength, psi | 6300 | 8382 | 7546 | 5658 | 6677 | 6364 |
| % Elongation | 154 | 69 | 182 | 108 | 225 | 183 |
| Specific gravity | 1.245 | 1.260 | 1.270 | 1.206 | 1.226 | 1.252 |
| Gardner Impact (dislodge)(in.-lbs.) | 425 | 480+ | 480+ | 475 | 480 | 480 |
| Melt Viscosity (pellets), poises at 266°C. | 7764 | 7053 | 5711 | 7753 | 10460 | 9888 |

The addition of a poly(carbonate ester) to a molding resin of a polyalkylene terephthalate and a vinyl copolymer improves the impact strength of articles molded therewith.

EXAMPLE 7

Several molding compositions were prepared in accordance with the method of Example 1 to illustrate the impact resistance obtained if various vinyl and ester resins are added to molding compositions containing, as the principal structural polymer, a polyalkylene terephthalate resin. The compositions were comprised as follows:

Table 7A

| Component | 1 | 2 | 3 | 4 | 5 | 6 |
|---|---|---|---|---|---|---|
| Valox 295[1] | 33.8 | 33.8 | 33.8 | 28.8 | 33.8 | 28.8 |
| RL 1624[2] | 18 | 18 | 18 | 18 | 18 | 18 |
| Glass | 30 | 30 | 30 | 30 | 30 | 30 |
| Irganox 1093 | .15 | .15 | .15 | .15 | .15 | .15 |
| Ferro 904 | .05 | .05 | .05 | .05 | .05 | .05 |
| Teflon 6 | .5 | .5 | .5 | .5 | .5 | .5 |
| KM 330 | -- | -- | 10 | 15 | 15 | -- |
| Copel 3320 | -- | -- | -- | -- | 10 | 15 |
| Hytrel 4056 | 10 | 10 | -- | -- | -- | -- |
| $Sb_2O_3$(Conc.)[3a] | -- | 7.5 | 7.5 | 7.5 | 7.5 | 7.5 |
| $Sb_2O_3$(Conc.)[3b] | 7.5 | -- | -- | -- | -- | -- |

[1] poly(1,4-butylene terephthalate),I.V. about 0.85 dl/g.

[2] flame retardant copolycarbonate of bisphenol-A and tetrabromobisphenol-A, 50:50 wt.%.

[3a] Chemetron $SbO_3$ concentrate in polyethylene from PPG, Inc.

[3b] Metal and Thermit Company $Sb_2O_3$ concentrate in polyethylen

Each composition was dried for a minimum of four hours at 250°F. The compositions were then compounded in a Prodex single screw extruder using a vibratory feeder and working at between 500°-540°F. at 100 rpm. The compositions were molded a 3 oz. Van Dorn injection molding machine. Spiral flow measurements were made using a 1/16 inch channel and 600 psi injection pressure, no boost pressure and 100 psi back pressure, with the barrel temperature set at 480°F. Tests of the physical properties of the moldings were performed. The results are summarized in Table 7B below:

Table 7B

| Properties | Compositions | | | | | |
|---|---|---|---|---|---|---|
| | 1 | 2 | 3 | 4 | 5 | 6 |
| Heat Distortion °F., 66 psi | 390 | 402 | 393 | 384 | 398 | 390 |
| Heat Distortion °F., 264 psi | 392 | 319 | 314 | 290 | 344 | 309 |
| Spiral Flow, in. | 7.3 | 6.3 | 4.2 | 3.5 | 6.3 | 6.6 |
| Notched Izod, ft.-lbs./in. | 1.36 | 1.84 | 2.02 | 2.38 | 1.87 | 1.95 |
| Unnotched Izod, ft.-lbs./in. | 9.49 | 11.66 | 12.83 | 12.24 | 11.60 | 10.82 |
| Flex strength, psi | 17714 | 19750 | 20120 | 18494 | 20636 | 16458 |
| Flex modulus, psi | 845205 | 859292 | 904518 | 758199 | 920670 | 781175 |
| Tensile strength, psi | 12267 | 14272 | 14656 | 13056 | 14763 | 11691 |
| Specific gravity | 1.637 | 1.635 | 1.601 | 1.572 | 1.612 | 1.599 |
| Gardner Impact (bottom), in.lbs. | 16 | 24 | 32 | 28 | 20 | 20 |
| Gardner Impact (top), in.lbs. | 40 | 48 | 52 | 48 | 52 | 44 |
| Gardner Impact (dislodge), in.lbs. | 44 | 64 | 68 | 88 | 66 | 68 |
| Melt Viscosity (pellets), poises at 266°C. | 7600 | 9452 | 45859 | 85926 | 13456 | 21682 |
| Flammability, U.L. Bulletin 94, 30 mils thickness | V-O | V-O | V-O | V-O | V-O | V-O |

## EXAMPLE 8

The following illustrates the effectiveness of two rubbery alkyl acrylate-styrene copolymers in improving the impact strength of polyterephthalate-polycarbonate moldings.

### Table 8A

| Component | 1 | 2 |
|---|---|---|
| Valox 315 | 69.8 | 69.8 |
| Lexan 135 | 15 | 15 |
| Irganox 1093 | .15 | .15 |
| Ferro 904 | .05 | .05 |
| RXL 686[1] | 15 | -- |
| P 19100-71B[2] | -- | 15 |

[1] methyl methacrylate-styrene copolymer from Goodyear Tire and Rubber Company.

[2] butylacrylate-styrene copolymer from Goodyear Tire and Rubber Company

- 28 -

The resulting compositions were then injection molded in accordance with the procedure of Example 1 into test strips.  The properties of the resulting test strips were as follows:

Table 8B

| Properties | Compositions | |
|---|---|---|
| | 1 | 2 |
| Heat distortion °F., 264 psi | 144 | 155 |
| Notched Izod (1/4"), ft.-lbs./in. | 9.79 | -- |
| Notched Izod (1/8"), ft.-lbs./in. | 19.73 | 2.03 |
| Unnotched Izod, ft.-lbs./in. | 5nb | 5nb |
| Flex strength, psi | 10089 | 12009 |
| Flex Modulus, psi | 266861 | 390587 |
| Tensile strength, psi | 6109 | 7140 |
| % Elongation | 194 | 212 |
| Specific Gravity | 1.273 | 1.254 |
| Gardner Impact (dislodge), in.-lbs. | 450 | 425 |
| Melt Viscosity (pellets), poises at 510°F. | 8751 | 5682 |

EXAMPLE 9

The following illustrates the effectiveness of five additional rubbery polymers in improving the impact strength of polyterephthalate-polycarbonate moldings.

Table 9A

| Component | 1 | 2 | 3 | 4 | 5 |
|---|---|---|---|---|---|
| Valox 315 | 68.3 | 68.3 | 68.3 | 68.3 | 68.3 |
| Lexan 135 | 15 | 15 | 15 | 15 | 15 |
| Microthene FN-510 | 1.5 | 1.5 | 1.5 | 1.5 | 1.5 |
| Irganox 1093 | .15 | .15 | .15 | .15 | .15 |
| Ferro 904 | .05 | .05 | .05 | .05 | .05 |
| 5619-32-4[1] | 15 | -- | -- | -- | -- |
| 5619-32-6[2] | -- | 15 | -- | -- | -- |
| 5619-32-9[3] | -- | -- | 15 | -- | -- |
| 5619-32-10[4] | -- | -- | -- | 15 | -- |
| 5619-32-11[5] | -- | -- | -- | -- | 15 |

1-5  Goodyear Tire and Rubber Company rubbery vinyl addition polymer resins.

The compositions were injection molded in accordance with the procedure of Example 1 to form test pieces which had the following properties:

Table 9B

| Properties | Compositions | | | | |
|---|---|---|---|---|---|
| | 1 | 2 | 3 | 4 | 5 |
| Heat Distortion °F., 264 psi | 132 | 132 | 135 | 144 | 139 |
| Notched Izod (1/4"),ft.lbs./in. | 5.68 | 11.67 | 14.16 | 14.42 | 7.02 |
| Notched Izod (1/8"),ft.lbs./in. | 16.32 | 16.16 | 18.69 | 18.53 | 15.01 |
| Unnotched Izod, ft.lbs./in. | 5nb | nb | nb | nb | nb |
| Flex strength, psi | 9915 | 9968 | 9796 | 9981 | 11488 |
| Flex modulus, psi | 263049 | 264398 | 256505 | 264398 | 298020 |
| Tensile strength, psi | 6080 | 6020 | 6195 | 6208 | 7021 |
| % Elongation | 252 | 277 | 262 | 138 | 186 |
| Specific Gravity | 1.236 | 1.230 | 1.230 | 1.245 | 1.243 |
| Gardner Impact in.lbs.(no collar) | 480 | 480 | 480 | 480 | 480 |
| Gardner Impact, in.-lbs.(dislodge | 425 | 425 | 400 | 450 | 480 |
| Melt Viscosity (pellets),poises at 510°F. | 14001 | 7547 | 10759 | 13228 | 7770 |

EXAMPLE 10

The following illustrates the comparative effectiveness of a rubbery polysiloxane-polycarbonate block copolymer and two rubbery vinyl polymers, each containing acrylonitrile, butadiene and styrene units as agents for improving the impact strength of molded articles of polyterephthalate polycarbonate resin compositions.

Table 10A

| Component | 1 | 2 | 3 | 4 |
|---|---|---|---|---|
| Valox 315 | 68.3 | 68.3 | 68.3 | 68.3 |
| Lexan 135 | 15 | 15 | -- | -- |
| Irganox 1093 | .15 | .15 | .15 | .15 |
| Ferro 904 | .05 | .05 | .05 | .05 |
| Microthene FN-510 | 1.5 | 1.5 | 1.5 | 1.5 |
| Copel 3320 | -- | -- | 15 | 15 |
| Blendex 310[1] | 15 | -- | 15 | -- |
| Polysar XC501[2] | -- | 15 | -- | 15 |

[1] acrylonitrile-butadiene-methyl methacrylate-styrene copolymer, Borg Warner Co.

[2] acrylonitrile-styrene polybutadiene graft copolymer, Polysar Corp., Canada

Table 10B

| Properties | 1 | 2 | 3 | 4 |
|---|---|---|---|---|
| Heat Distortion °F., 264 psi | 154 | 131 | 122 | 118 |
| Notched Izod (1/4"),ft.-lbs/in. | 2.80 | 3.94 | 3.86 | 12.11 |
| Notched Izod (1/8"),ft.-lbs/in. | 10.30 | 8.58 | 15.39 | 14.30 |
| Flex Strength, psi | 10708 | 9915 | 8328 | 7139 |
| Flex modulus, psi | 291285 | 277191 | 232241 | 193099 |
| Tensile Strength, psi | 6656 | 5888 | 5184 | 4096 |
| % Elongation | 214 | 229 | 246 | 279 |
| Specific Gravity | 1.225 | 1.225 | 1.210 | 1.214 |
| Gardner Impact (dislodge), in-lbs. | 480 | 425 | 400 | 350 |
| Melt viscosity (pellets),poises at 510°F. | 9566 | 10429 | 5259 | 5808 |

EXAMPLE 11

The following illustrates the comparative effectiveness of certain butadiene copolymers and a butadiene homopolymer in improving the impact strength of polybutylene terephthalate moldings.

Table 11A

| Component | 1 | 2 | 3 | 4 | 5 | 6 | 7 | 8 |
|---|---|---|---|---|---|---|---|---|
| VALOX | 80 | 80 | 80 | 80 | 80 | 80 | 80 | 80 |
| Polysar Butyl 301[1] | 20 | -- | -- | -- | -- | -- | -- | -- |
| Polysar Butyl 111[2] | -- | 20 | -- | -- | -- | -- | -- | -- |
| Krynac 27.50[3] | -- | -- | 20 | -- | -- | -- | -- | -- |
| Krynac 34.60[4] | -- | -- | -- | 20 | -- | -- | -- | -- |
| Krynac 806[5] | -- | -- | -- | -- | 20 | -- | -- | -- |
| Krynac 1100[6] | -- | -- | -- | -- | -- | 20 | -- | -- |
| Krynac 221[7] | -- | -- | -- | -- | -- | -- | 20 | -- |
| Taktene[8] | -- | -- | -- | -- | -- | -- | -- | 20 |

1-2  Rubbery isobutylene-isoprene copolymers, Polysar Corp.

3-8  Rubbery acrylonitrile-butadiene copolymers.

The resulting compositions were compounded by the method of Example 1 and were injection molded to form test pieces. The properties of the test pieces were as follows:

Table 11B

| Properties | Compositions | | | | | | | |
|---|---|---|---|---|---|---|---|---|
| | 1 | 2 | 3 | 4 | 5 | 6 | 7 | 8 |
| Notched Izod,ft.-lbs./in. | 2.91 | 3.41 | 3.73 | 3.90 | 3.44 | 4.02 | 4.59 | 2.98 |
| Unnotched Izod, ft.-lbs./in.* | 34.7 | 32.0 | 27.4 | 29.3 | 33.6 | 25.9 | 33.1 | 22.4 |
| Flex Strength, psi | 8408 | 8408 | 8209 | 8487 | 8765 | 8606 | 8566 | 7930 |
| Flex Modulus, psi | 243770 | 245512 | 229144 | 223192 | 238692 | 235422 | 235422 | 229440 |
| Tensile Strength, psi | 5453 | 5333 | 5252 | 5408 | 5448 | 5305 | 5431 | 5120 |
| % Elongation | 99.9 | 123.7 | 192.8 | 184.5 | 246.3 | 209 | 259.4 | 192 |
| Gardner Impact (dislodge),in.-lbs. | 108 | 450 | 150 | 200 | 80 | 150 | 300 | 350 |
| Melt Viscosity (pellets), 266°C. | 3697 | 3963 | 5787 | 6781 | 3546 | 3890 | 5472 | 7108 |
| Melt Viscosity (pellets), poises at 250°C. | 6389 | 6319 | 9319 | 12073 | 7342 | 7095 | 10166 | 12426 |

* unnotched Izod - 1,2,6 and 7 - several specimens did not break

- 34 -

The above-mentioned patents and/or patent applications are incorporated herein by reference. Obviously, other modifications and variations of the present invention are possible in the light of the above teachings. For example, the reinforced and/or filled compositions can be provided with stabilizers, and other polyesters and vinyl polymers can be used which are closely related to and which provide substantially the same results as those which have been specifically disclosed above. It is, therefore, to be understood that changes may be made in the particular embodiments described above which are within the scope of the invention as defined in the appended claims.

10238-8CV-3045

CLAIMS

1. A thermoplastic molding composition comprising:

    (a) a poly($C_{2-6}$ alkylene terephthalate) resin and a minor proportion of

    (b) an aromatic polycarbonate resin combined with

    (c) a rubbery vinyl addition polymer, the combined amounts of (b) and (c) being effective to increase the impact strength of articles molded from said component (a).

2. A composition according to Claim 1 wherein said poly($C_{2-6}$ alkylene terephthalate) resin is poly(1,4-butylene terephthalate).

3. A composition according to Claim 1 wherein said poly($C_{2-6}$ alkylene terephthalate) resin is poly-(ethylene terephthalate).

4. A composition according to Claim 1 wherein the poly($C_{2-6}$ alkylene terephthalate) resin is a copolyester of poly(1,4-butylene terephthalate).

5. A composition according to Claims 2 or 4 also including poly(ethylene terephthalate).

6. A composition according to Claim 1 wherein said rubbery vinyl polymer contains acrylic units.

7. A composition according to Claim 1 wherein said polycarbonate resin is a poly(bisphenol-A carbonate).

8.  A composition according to Claim 1 wherein said polycarbonate resin is a poly(bisphenol-A carbonate-co-silicone).

9.  A composition according to Claim 1 wherein said rubbery vinyl polymer comprises substantially linear carbon chains.

10. A composition according to Claim 9 wherein the linear carbon chains of said polymer contain olefinically unsaturated double bonds.

11. A composition according to Claim 1 which also includes (d) a poly($C_{2-6}$ alkylene oxide-co-$C_{2-6}$ alkylene terephthalate) resin to improve impact strength.

12. A composition according to Claim 1 which also includes (e) poly(carbonate-co-ester) resin to improve impact strength.

13. A composition according to Claim 1 wherein the polycarbonate resin is a poly(bisphenol-A carbonate-co-silicone) resin and the vinyl polymer is a styrene-butadiene-block copolymer.

14. A composition according to Claim 13 wherein the vinyl polymer is radial teleblock copolymer of styrene and butadiene.

15. A composition according to Claim 12 wherein the vinyl polymer is a butadiene-methyl methacrylate-styrene copolymer.

- 3 -

16. A composition according to Claim 1 which also includes (f) an additive selected from a fibrous reinforcing agent; a mineral filler; a stabilizer; a mold release agent; a dye; a pigment; a flame retardant, or a mixture of any of the foregoing.

17. A composition according to Claim 1 wherein the rubbery vinyl addition polymer (c) is selected from the group consisting of:

an acrylonitrile-butadiene copolymer;

an acrylonitrile-butadiene-acrylonitrile block copolymer;

an acrylonitrile-butadiene-styrene copolymer;

an acrylonitrile-butadiene-methyl metacrylate-styrene copolymer;

a random $C_{1-4}$ alkyl $C_{3-4}$ acrylate-styrene copolymer;

a butadiene-methyl methacrylate styrene copolymer;

a butyl acrylate-styrene copolymer;

a butyl acrylate-methyl acrylate copolymer;

a methyl methacrylate-styrene linear or radial block copolymer;

an ethylene-propylene diene rubber; and

a mixture of any of the foregoing.

18. A composition according to Claim 1 wherein said polycarbonate resin is a poly(carbonate-co-ester) resin.

19. A composition according to Claim 18 which also includes (g) a polyester copolymer.

20. A composition according to Claim 18 wherein the poly($C_{2-6}$ alkylene terephthalate) is a poly(ethylene terephthalate).

21. A composition according to Claim 18 wherein the poly($C_{2-6}$ alkylene terephthalate) is a poly(1,4-butylene terephthalate).

22. A composition according to Claim 18 which also includes (f) an additive selected from a fibrous reinforcing agent; a mineral filler; a stabilizer; a mold release agent; a dye; a pigment; a flame retardant; or a mixture of any of the foregoing.

23. A composition according to Claim 18 wherein the rubbery vinyl addition polymer is a butadiene-methyl methacrylate-styrene copolymer.

24. A composition according to Claim 18 wherein the rubbery vinyl addition polymer is a butyl acrylate-methyl acrylate copolymer.

25. A composition according to Claim 18 wherein the rubbery vinyl addition polymer is an acrylonitrile-butadiene-styrene copolymer.

26. A composition according to Claim 18 wherein the rubbery vinyl addition polymer is a styrene-butadiene-styrene block copolymer.

27. A composition according to Claim 18 wherein the rubbery vinyl addition polymer is a radial teleblock copolymer of styrene and butadiene.

28. A composition according to Claim 18 wherein the rubbery vinyl addition polymer is an acrylonitrile-butadiene-methyl methacrylate-styrene copolymer.

29. A thermoplastic molding composition comprising (a) a poly($C_{2-6}$ alkylene terephthalate) resin, and a minor proportion of (b) a poly(carbonate-co-silicone) resin combined with (c) a poly(carbonate-co-ester) resin, the combined amounts of (b) and (c) being effective to increase the impact strength of articles molded from said component (a).

30. A composition according to Claim 29 which also includes (g) a polyester copolymer.

31. A thermoplastic molding composition comprising (a) a poly($C_{2-6}$ alkylene terephthalate) resin and a minor proportion of (b) a polycarbonate resin, combined with (c) a poly(carbonate-co-silicone) resin, the combined amounts of (b) and (c) being effective to increase the impact strength of articles molded from said component (a).

32. A thermoplastic molding composition comprising (a) a poly($C_{2-6}$ alkylene terephthalate) resin and a minor proportion of (b) a rubbery polybutyl acrylate-methyl methacrylate copolymer in combination with (c) a polycarbonate resin, the combined amounts of (b) and (c) being effective to increase the impact strength of articles molded from said component (a).

33. A composition according to Claim 1 wherein the rubbery vinyl addition polymer comprises polybutadiene units.

34. A composition according to Claim 33 wherein the poly($C_{2-6}$ alkylene terephthalate) resin is poly(ethylene terephthalate).

35. A composition according to Claim 33 wherein the poly($C_{2-6}$ alkylene terephthalate) resin is poly(1,4-butylene terephthalate).

36. A composition according to Claim 33 wherein the poly($C_{2-6}$ alkylene terephthalate) resin is a polyester copolymer.

37. A composition according to Claim 33 wherein the butadiene polymer is an acrylonitrile-butadiene.

38. A composition according to Claim 33 wherein the polycarbonate resin is a poly(bisphenol-A carbonate) resin.

39. A composition according to Claim 33 wherein the polycarbonate resin is a poly(carbonate-co-silicone) resin.

40. A composition according to Claim 33 wherein the butadiene polymer is an isobutylene-(2-methylbutadiene) copolymer.

41. A composition according to Claim 33 wherein the butadiene polymer is polybutadiene.

42. An article molded from a composition according to Claim 1.

43. An article molded from a composition according to Claim 29.

44. An article molded from a composition according to Claim 31.

45. An article molded from a composition according to Claim 32.

## European Patent Office

**EUROPEAN SEARCH REPORT**

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 061 973 (GENERAL ELECTRIC)  * Claims 1,12; examples 1-27 * | 1-5,7-10,14,16,26,27,33-36,42,43 | C 08 L 67/02 //<br>(C 08 L 67/02<br>C 08 L 69/00<br>C 08 L 53/00<br>C 08 L 55/00 ) |
| X | FR-A-2 197 930 (TEIJIN LTD.)  * Claims 1-7 * | 1-8,10,15-17,23,25,28,33-38,42,43 | |
| X | FR-A-2 400 537 (ROHM & HAAS)  * Claims 1-11 * | 1-8,10,15-17,23,25,28,33-38,42,43 | |
| X | WO-A-8 001 276 (GENERAL ELECTRIC)  * Claims 1-15 * | 1-5,7-10,14,16,26,27,33-36,42,43 | |

**TECHNICAL FIELDS SEARCHED (Int. Cl. ³)**

C 08 L

-/-

The present search report has been drawn up for all claims

| Place of search | Date of completion of the search | Examiner |
|---|---|---|
| THE HAGUE | 06-01-1983 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| | **DOCUMENTS CONSIDERED TO BE RELEVANT** | | | Page 2 |
|---|---|---|---|---|

| Category | Citation of document with indication, where appropriate, of relevant passages | Relevant to claim | CLASSIFICATION OF THE APPLICATION (Int. Cl. ³) |
|---|---|---|---|
| X | WO-A-8 001 167 (GENERAL ELECTRIC) | 1-5,7-10,14,16,26,27,33-36,42,43 | |
| | * Claims 1-18 * | | |
| | --- | | |
| A | EP-A-0 033 393 (GAF) <br> * Claim 1 * | 1-11 | |
| | ----- | | |

TECHNICAL FIELDS
SEARCHED (Int. Cl. ³)

The present search report has been drawn up for all claims

| Place of search <br> THE HAGUE | Date of completion of the search <br> 06-01-1983 | Examiner <br> DECOCKER L. |
|---|---|---|